(19) Europäisches Patentamt
European Patent Office
Office européen des brevets

(11) EP 3 249 603 A1

(12) EUROPEAN PATENT APPLICATION

(43) Date of publication:
29.11.2017 Bulletin 2017/48

(51) Int Cl.:
G06T 3/00 (2006.01)        G06T 7/20 (2017.01)
G06T 5/30 (2006.01)        G06T 7/00 (2017.01)

(21) Application number: 16171267.4

(22) Date of filing: 25.05.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: IMINT Image Intelligence AB
753 11 Uppsala (SE)

(72) Inventor: PIUVA, David
753 11 UPPSALA (SE)

(74) Representative: Brann AB
P.O. Box 3690
Drottninggatan 27
103 59 Stockholm (SE)

(54) DETECTION OF MOTION IN VIDEO FROM PORTABLE DEVICES

(57) A method for detecting motion in a video, the method comprising the steps of:
Getting (1) self-rotation from frame to frame; storing (1.2) a history of old images and projective transforms; accumulating (1.3) transforms from the oldest image to the newest image; detecting (2) motion for each point in a lower resolution image; eroding (3) the motion image; applying (4) regional analysis on the motion image to make it very small.

Only gray-scale is used in this method because colors have less quality if they even exist at all.

FIG. 1

**Description**

FIELD OF THE INVENTION

The present invention relates to detecting motion in a video stream and in particular to a method for detecting motion in a shaking video stream.

The intended area of use is for hand-held devices having a camera and capable of capturing video for live streaming or recording. Other uses such as surveillance, post production of videos or autonomous vehicles might also occur.

The intended area of use is for hand-held devices having a camera and capable of recording video.

BACKGROUND OF THE INVENTION

Detecting motion in a shaking video from a hand-held device having a camera capable of recording video is a difficult problem because of self-motion, rolling shutter, motion blur, changing focal blur, static noise, changing light conditions, parallax effects, high frequency patterns, moving water, background crowds and vegetation blowing in the wind.

Another problem is that the computational resources available in portable devices are usually limited in order to extend battery life. Therefore, the detection of motion in a video typically has to be able to perform without extensive computational resources.

While standing still, the result is good enough to roughly detect where something of interest is moving but there is still a need for improved detection of motion in video streams from portable devices since parallax has shown to be a big problem when the camera is moving.

Prior art is disclosed in "Motion detection: fast and robust algorithms for embedded systems" http://perso.ensta-paristech.fr/-manzaner/Publis/icip09.pd and in "An Advanced Motion Detection Algorithm with Video Quality Analysis for Video Surveillance Systems".

Panoramic stitching can be used if the camera can rotate in a static scene. This can be used to train a background image with a larger field of view.

A method using a dynamically generated panorama as the background is described in "An effective real-time mosaicing algorithm apt to detect motion through background subtraction using a PTZ camera".

SUMMARY OF THE INVENTION

An object of the present invention is to provide detection of motion in a video. This object is achieved by a method for detecting motion in a video for detecting motion in a video as defined in the independent claim.

A particular object of the present invention is to be able to detect an object of interest, such as a person to follow using automatic digital zoom, which requires a rough estimation of motion to segment the person from the background. Having a few false detections is acceptable because all moving objects that are not being tracked are also considered as false detections.

According to an aspect of the present invention, image differencing is used in the method as claimed. Two images with some time offset are compared using a pixel-wise subtraction. This allows detecting motion even if the scene recently changed completely.

Image differencing is not as popular as estimating the background because most motion detection systems has a mounted camera that barely moves.

Optical flow can be combined with other steps to solve everything in the claimed method but also giving two dimensional direction and speed information. Optical flow is usually following stable feature points between two frames to detect motion. The performance cost is however a problem on limited hardware since it is required to follow a few points on the CPU with poor quality or wait for the GPU to finish multiple iterations at a high performance cost.

According to an embodiment of the invention, there is provided a method for detecting motion in a video stream. The method comprises the steps of:

The method comprises the steps of:

Estimating global rotation for T[t-d..t]. This step typically includes one or more of the sub-steps: getting global rotation for T[t-1..t], storing old images and transforms, and accumulating transforms; Detecting motion. This step typically includes one or more of the sub-steps: sampling, estimating smoothness, estimating brightness, detecting differences, estimating movement and compensating for light changes; and Eroding.

The method optionally also comprises one or more of the steps of:

Regional analysis. An advantage is that this step provides an image that is faster to segment.

Applying a radial mask. An advantage with this step is to reduce false positives from fast moving corners.

Estimating false detection by thresholding the result with a lower threshold and adjusting time delta and erosion for the next frame

Applying Temporal motion blur. An advantage is that this steps merge motion edges into full shapes.

An advantage is that the method according to an aspect extends the capability of a device for capturing video by letting the device know where to automatically zoom in. For example, the method can be implemented by means of a custom signal processor for a hand-held device or just equivalent software together with the required sensors needed to estimate self-rotation with enough precision.

The method is suitable for a portable device such as a mobile phone, smart phone, or tablet computer, having a camera and that is adapted for recording a video. Herein, the term "portable device" includes any portable device capable of taking images, including phones, tablets and laptops.

Thanks to the method of the present disclosure, according to one aspect, it is possible for users of portable devices such as mobile phones, smart phones and tablet computers having a camera capable of recording video to detect movement in a shaking video using existing available processing power and memory of a computing device comprised in the portable device.

According to one aspect of the present invention, the method can be implemented by means of a computer program product comprising instructions for causing a computer executing the instructions to perform the method.

The method can be implemented in software, hardware and/or any combination of hardware or software. Central processing units (CPU), graphical processing units (GPU), digital signal processors (DSP), field programmable gate arrays (FPGA) or application specific integrated circuit (ASIC) for example.

Embodiments of the invention are defined in the dependent claims. Other objects, advantages and novel features of the invention will become apparent from the following detailed description of the invention when considered in conjunction with the accompanying drawings and claims.

BRIEF DESCRIPTION OF THE DRAWINGS

Preferred embodiments of the invention will now be described with reference to the accompanying drawings, wherein

FIG. 1 shows an overview of a method according to an embodiment of the invention;
FIG. 2a-c illustrates Formula 5;
FIG. 3a-b shows examples of erosion using pixels with a 3x3 neighborhood and clamped sampling; and
FIG. 4a-c shows examples of separable maximum filter.

DETAILED DESCRIPTION OF EMBODIMENTS

For the purpose of this disclosure and for clarity, the following definitions and explanations are made.

**Mathematical expressions and definitions**

p is a two dimensional point within an image.

t is the index of the current frame.

d is the number of frames between the images to compare.

V is a video stream.

V[t] is the new image from the video stream V.

V[t-d] is the old image from the same video stream V.

V[t][p] is the gray-scale value at location p in frame V[t].

A is the intensity samples from V[t].

B is the intensity samples from V[t-d].

D is the set of difference images from V and T before any post processing.

D[t] is the new difference image for frame t.

T is a set of projective transform functions that can be multiplied with each other. Each index represents an interval of frame indices to transform between.

T[n-1..n] are stored in a buffer for as long as needed while T[t-d..t] is calculated when needed.

T can either represent the camera relative to the world or the world relative to the camera.

T[a..b] * T[b..c] = T[a..c]

T[a..b](p) is the sampling location in V[b] corresponding to p on V[a]. If the camera rotates to the right then the sampling location will rotate to the left because the point is a part of the world space projected to image space. Conversion between camera space and image space is assumed to be common general knowledge.

**Images**

"Point" is a location within an image. Usually expressed in Cartesian coordinates.
"Cell" is the Voronoi region closest to a certain point in an image used to store a color. Usually pixels because of current camera and display technology. Herein this disclosure, there is no reference to pixels unless specific GPU optimizations are mentioned to explain current design decisions.
"Planar projection" in the context of cameras is to project a 3D world to a plane across a pinhole.
"Planar" in the context of colors means having all cells of the same channel grouped together in memory.
"Packed" in the context of colors means having all channels of a cell grouped together in memory.
"Digital" is to represent data in base 2 bits but by logical equivalence, other ways to represent the same values is covered as well. Solid state drives are already using 4 state memory cells that are technically not digital but representing two bits per memory cell.

**Operations**

"Point operations" are only allowed to read from a certain cell in the input image.
"Local operations" are only allowed to read from a certain neighborhood of cells in the input image.
"Global operations" have no restriction to which cells they may read from.

**Memory access paradigms**

"Read paradigm" is to only write the result to a certain place without other external side effects. Pixel/fragment shaders follow the read paradigm with an exception for gradient operations.
"Write paradigm" is the lack of read paradigm by allowing random access writes. Compute shaders can write to a random location but only with certain order independent operations.

**Other definitions**

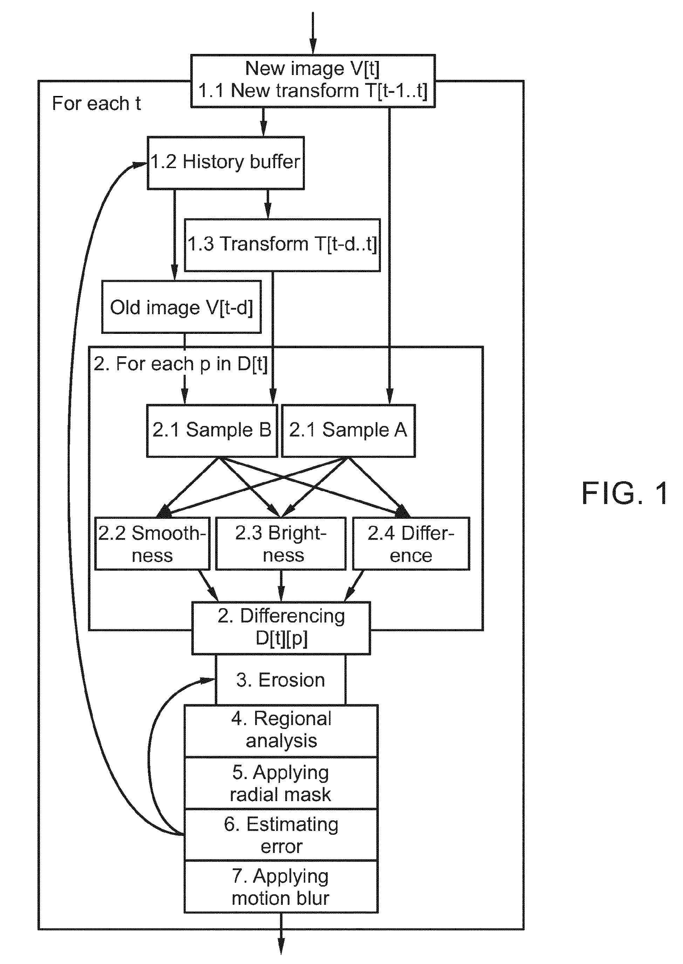

"Accuracy" is the lack of systematic error in the estimation having the average expected result close to the ground truth. Distance to ground truth can sometimes be minimized using lowpass filtering.
"Precision" is the ability to be deterministic so that the same input gives close to the same output. Precise data can be corrected by calibrating with a mapping function.
"Drift" is the lack of precision by accumulating a systematic error.
Now is referred to FIG. 1, which is an overview of a method for detecting motion in a video stream denoted "video in" according to an embodiment of the invention. In particular, FIG. 1 shows the steps 1-2 needed to get a low resolution difference image that can then be given as input to a motion blur filter.

According to an embodiment of the invention, there is provided a method for detecting motion in a video stream.

The method comprises the steps of:

Step 1. Estimating global rotation for T[t-d..t]. This step 1 typically includes one or more of the sub-steps: getting global rotation for T[t-1..t], storing old images and transforms, and accumulating transforms.

Step 2. Detecting motion. This step 2 typically includes one or more of the sub-steps: sampling, estimating smoothness, estimating brightness, detecting differences, estimating movement and compensating for light changes.

Step 3. Eroding

Step 4. Regional analysis

The method optionally also comprises one or more of:

Step 5. Applying a radial mask

Step 6. Estimating error

Step 7. Temporal motion blur

The main steps corresponding to the method are denoted with numerals 1, 2, 3 and the respective sub-steps 1.1; 2.1; 3.1 and so on. Each step and sub-step will be explained in detail as follows, wherein the same reference numerals are used throughout the disclosure. Thus, the steps can be divided as follows:

**1.** Estimating global rotation for T[t-d..t]

    **1.1.** Getting global rotation for T[t-1..t]

    **1.2.** Storing old images and transforms

    **1.3.** Accumulating transforms

**2.** Detecting motion

    **2.1.** Sampling

    **2.2.** Estimating smoothness

    **2.3.** Estimating brightness

    **2.4.** Detecting differences

    **2.5.** Estimating movement

    **2.6.** Compensating for light changes

**3.** Erosion

**4.** Regional analysis

**5.** Applying a radial mask

**6.** Estimating error

**7.** Temporal motion blur

Now certain parts of the method according to various specific embodiments will be described even further as follows, but without any limitations to the specific embodiments.

### Step 1. Estimating global rotation for T[t-d..t]

Since comparing from frame to frame might not be accurate enough for normal frame-rates we need to compare images that are further away from each other so that motions of interest are accumulated to a longer distance while accidental movement from poor precision will hopefully just shake around the same location without drifting anywhere. If the camera translates over a large distance then parallax will accumulate a large move too and ruin the result. The variable d controls how many frames back in history the old image should be taken from.

One problem is that detecting moving objects is difficult when global motion exists.

This is solved by removing self-rotation from the global motion using a projective transform so that things that do not move will have a better chance of overlapping.

One limitation might be that self-translation will still be a big problem indoors but in outdoor scenes, the effect of accidental self-translation is very small compared to the larger effect of accidental rotation that is corresponding to meters of translation with just a few degrees.

### Step 1.1. Getting global rotation for T[t-1..t]

The initial step 1.1 is to get global rotation from neighboring frames V[t-1] and V[t] using any method that does not cause significant drifting. This step is not always required since it is an external input that can be given from gyro sensors.

### Step 1.2. Storing old images and transforms

In step 1.2 frames V[t-d] to V[t] are stored so that the oldest and newest images can be compared.

Each new frame V[t] comes with a transform T[t-1..t].

Transforms T[t-d..t-d+1] to T[t-1..t] needed to calculate T[t-d..t] are stored.

Note that there is one less transformation than image to store because the transform that came with the oldest image is T[t-d-1..t-d] and we don't keep V[t-d-1] to align using the oldest transform. Preferably, one extra transform can be stored for the sake of clarity since then a single cyclic buffer can be used for both images and transforms.

### Step 1.3. Accumulating transforms

This is a well-known step for the skilled person, but will be explained anyway for completeness.

The old frame V[t-d] transformed with the resulting projective transform T[t-d..t] should overlap with the new frame V[t] where nothing moves relative to the scene. Solve the projective transform function T[t-d..t] so that the equation V[t-d][T[t-d..t](p)] = V[t][p] is satisfied when there is no parallax nor movement. A projective transform should define a camera orientation and the field of view. Matrices and quaternions are popular representations for transforms and we can assume that the field of view is constant for each device.

If we can get from a to b and from b to c then we can get from a to c using a transitive operation.

Start by solving for an arbitrary interval a..b where b is significantly greater than a, see Exp. 1 as follows.

$$T[a..b] = T[a..a+1] * T[a+1..a+2] * \ldots * T[b-2..b-1] * T[b-1..b] \qquad \text{Exp. 1}$$

Expression replacement gives us the final formula for transforming V[t-d] to overlap V[t].

$$T[t-d..t] = T[t-d..t-d+1] * T[t-d+1..t-d+2] * \ldots * T[t-2..t-1] * T[t-1..t] \qquad \text{Exp. 2}$$

Table 1 below shows transforms for frame 0 to 6.

Table 1

| Unit | 1..0 | 2..0 | 3..0 | 4..0 | 5..0 | 6..0 |
|------|------|------|------|------|------|------|
| 0..1 | Unit | 2..1 |      |      |      |      |

(continued)

| Unit | 1..0 | 2..0 | 3..0 | 4..0 | 5..0 | 6..0 |
|------|------|------|------|------|------|------|
| 0..2 | 1..2 | Unit | 3..2 |      |      |      |
| 0..3 |      | 2..3 | Unit | 4..3 |      |      |
| 0..4 |      |      | 3..4 | Unit | 5..4 |      |
| 0..5 |      |      |      | 4..5 | Unit | 6..5 |
| 0..6 |      |      |      |      | 5..6 | Unit |

The T[a..a] diagonal will always contain unit transforms since no movement is done in no time. The lower left half is the forward camera transforms where the camera's movement is expressed relative to the old camera space. The upper right half is the inverse transforms going backwards by representing the world's orbit around a fixed camera. The first column has the temporary transforms for calculating T[t-d..t] and the first row does the same for the inverse T[t..t-d]. Only one of the diagonals next to the unit transforms are stored in the history buffer.

Both DirectX and OpenGL, for instance, use inverse matrices representing the world relative to the camera for projecting vertices from the world to the image instead of the camera relative to the world. Inverse matrices are multiplied in the opposite order to make sure that the right side starts where the left side ends. In that case the inverse of T[t-d..t] will be required by simply reversing the expression Exp. 1 below.

$$T[t..t-d] = T[t..t-1] * T[t-1..t-2] * \ldots * T[t-d+2..t-d+1] * T[t-d+1..t-d] \qquad Exp. \ 3$$

**Step 2. Detecting motion**

All parts of this step 2 is a combined point operation and therefore, all new variables until D[t][p] is calculated are local variables within this point operation to keep the syntax clean. All internal steps are expressed in read paradigm to allow parallel execution.

One problem is to detect motion between the new and old images for each point p in D[t]. Just comparing both images on the same locations will not match because the camera moves too.

A solution is to apply a transform to the sampling locations of the old image. On places where the images are not overlapping, no motion is detected.

Preferably, this can be done using fixed function graphics hardware by filling the target image with zero and then drawing a quad as a transformed quad of two triangles. Interpolation from vertex to pixel/fragment shader will give correct perspective.

The difference image is usually $768 \times 432$ or $768 \times 576$ depending on input aspect ratio. The width should be aligned to what is most efficient on the target hardware and the height should preserve aspect ratio.

Since graphics hardware have a high memory bandwidth instead of depending on cache reuse, the resolution of the input video does not have a significant impact on performance as long as it can fit inside the graphics memory. The time spent on this step depends on the number of output pixels since that is the number of tasks to perform. Therefore, having a fixed width on the difference image makes sure that the input video can be $3840 \times 2160$ without problems.

**Step 2.1 Sampling both images with a transform applied to the old image**

In our implementation of the method, the original images from the video stream are stored in the YUV 420 semi-planar format where gray-scale values have one image and the colors have their own image of half the resolution. Therefore, we only read the Y channel containing the gray-scale from the images. See Formula 1 below.

**Definitions:**

"A" is multiple gray-scale intensity values from the new image V[t].
"B" is multiple gray-scale intensity values from the old image V[t-1] using the transform T.

$$A[i] = V[t][p + offset[i]] \qquad Formula \ 1$$

$$B[i] = V[t-d][T[t-d..t](p) + offset[i]] \qquad \text{Formula 2}$$

**Step 2.2 Estimating smoothness**

One problem is that large areas of high frequency patterns will have non overlapping intensity from very little movement.
One solution implies that the areas must be discriminated with a noise penalty. See Formula 3 below.

**Definitions:**

"min" is a minimum function returning the lowest of elements.
"max" is a maximum function returning the highest of elements.
"penalty" is a constant that can be set to 4 by default.

$$\text{smoothness} = \max(0, 1 - \max(\max(A) - \min(A), \max(B) - \min(B))) * \text{penalty}) \qquad \text{Formula 3}$$

**Step 2.3 Estimating brightness**

One problem is that when using image differencing to detect motion, movement in dark areas is not detected as clearly because when the diffuse reflectivity is multiplied by less light, the derivatives decreases too.
Comparing differences relative to the brightest intensity solves the problem but introduces yet another problem of noise and band artifacts from dividing with too small values. If the estimated brightness to use as the scale is mixed with 10% white so that it does not go all the way down to black, it is still possible to detect motion in dark areas but without too much noise. See Formula 4 below.

**Definitions:**

"average" is an arithmetic mean taking the sum divided by the number of elements.

$$\text{brightness} = \max(\text{average}(A), \text{average}(B)) * 0.9 + 0.1 \qquad \text{Formula 4}$$

**Step 2.4 Detecting differences between old and new images**

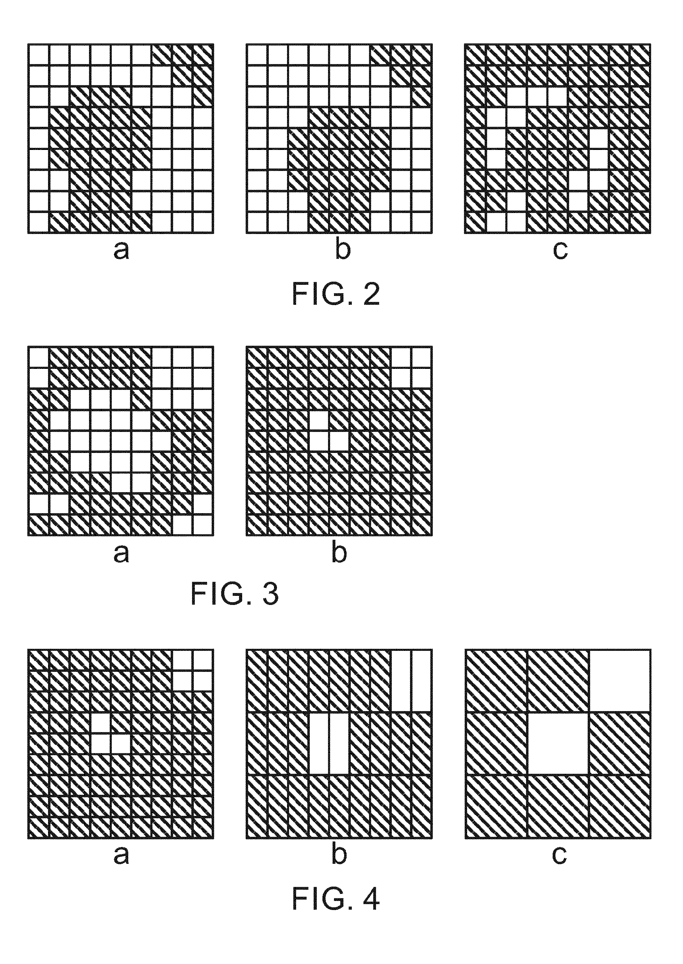

One solution is to take the absolute difference between the average luma values. This is given by Formula 5 and illustrated in FIG. 2a-c, to which are referred.

$$\text{difference} = |\text{average}(A) - \text{average}(B)| \qquad \text{Formula 5}$$

**Step 2.5. Estimating movement**

One solution is that the estimated properties are combined into a difference image with noise penalty and brightness compensation to estimate movement. This is given by Formula 6 as follows.

$$\text{movement} = \text{difference} * \text{smoothness} / \text{brightness} \qquad \text{Formula 6}$$

**Step 2.6 (optional). Compensating for light changes**

One problem is that automatic exposure and varying light conditions cause false detection.
One solution, according to an embodiment, in addition to the above related to the first embodiment, is to have a threshold that subtracts away differences that are too small to matter. This is given in Formula 7 below.

**Definitions:**

"threshold" is how much to subtract from the result to get rid of small light changes.
"clamp(x, a, b)" returns the value from a to b that is closest to x given that a <= b.

$$D[t][p] = clamp(movement - threshold, 0.0, 1.0) \qquad \text{Formula 7}$$

Since the next step is a local operation reading from multiple points, we now have to save our result to an image. An advantage is that clamping makes sure that we do not get negative values or extreme outliers. Graphics hardware will clamp the result automatically while converting to integer format before the blend stage.

**Step 3. Eroding**

One problem is that parallax from self-translation and moves that are too slow to be of interest cause thin lines in the difference image.
One solution is to erode the difference image so that thin lines vanish.
Eroding is a local operation following the read paradigm taking the minimum brightness of a local neighborhood around the output cell. An advantage is that this step benefits from being separable on both serial and parallel hardware because the output from the first linear pass is used many times in the next pass. We do not compensate for planar projection in this step because it would be too expensive or cause band artifacts.
Example of erosion using pixels with a 3×3 neighborhood and clamped sampling is shown in FIG. 3a-b.

**Step 4. Regional analysis (optional)**

One problem is that segmenting the movement image can be difficult in real-time because efficient segmentation has to perform many steps in serial and therefore we are often limited to processing units with low data bandwidth like CPUs.
To make segmentation faster, the difference image is scaled down to fit into cache memory in this step. To avoid losing information that costed a lot of calculations to get, we divide the input image into regions and perform statistical analysis on all cells within each region that is then combined into a low resolution motion image. Each output point takes a mix of maximum and average of the closest input points.

This makes the image smaller and easier to handle.

According to one embodiment, on parallel graphics hardware using pixels, this can be done by first making a vertical sweep resulting in a low image of original width average and maximum from standing lines stored in two channels and then reading those in a horizontal sweep taking the average of averages and maximum of maximums that will be mixed together and stored in a low resolution single-channel image. Whether the two channels are packed or planar images does not matter to the result but packed images are usually faster on graphics hardware to avoid channel padding in multiple data instructions and extra draw calls. We do the vertical step first to get a wide intermediate image for storing average and maximum because wide textures use less padding on our target hardware and therefore uses less memory.
Example of separable maximum filter is shown in FIG. 4a-c.
The real analysis will usually go from 768×432 or 768×576 to 64×32 pixels and include the average.
Unlike local morphology filters (erosion, dilation...) which are reading overlapping neighborhoods, separating this step into vertical and horizontal does not reduce the number of calculations to perform. The only benefit from spatial separability in this step is the ability to use more threads at the same time on graphics hardware.

**Step 5. Applying a radial mask (optional)**

One problem is that a planar projection divides size by depth instead of distance causing the edges to have more length in image space per actual length in the real world at the same distance. If the camera is aligned with a railway then there is no problem since it then makes sense to use depth instead of distance. But if a wide angle camera is let to rotate freely then the planar projection will be perceived as more sensitive on the edges by having more cells per angle there.
To solve the above problem, a radial mask can optionally be applied using multiplication to reduce sensitivity on the edges.

This step just like all other mapping functions can be applied at the end of any previous step without having to store an intermediate image.

This step is not needed for a narrow field of view.

## Step 6. Estimating error (optional)

One problem is that since the difference image represents intensity of changing light, we have no idea of how fast something is moving.

To use a dynamic threshold on speed and not just intensity, we look at how much response we get after a low threshold to estimate the amount of false detections from sel- translation. We can then adjust the time delta d for the next frame to that image differencing will perceive all motion as if time moves slower until only the moving objects of interest are still visible. When adjusting time delta has reached its limit, we also increase the amount of erosion to apply on the movement image but by then, the input is mostly garbage and we just want to prevent false detections from covering the whole image.

Estimating the sum of cells above a certain threshold is write paradigm and therefore not suitable for parallel graphics hardware. The invention is thus not limited to this step, which is optional and not even suitable for parallel graphics hardware.

Everything in this step is just exception handling to cover up the things that the method cannot handle given the limited computational resources so there is no right solution. Future devices will hopefully not have to do this.

This step is not need for a mounted camera.

## Step 7. Temporal motion blur (optional)

One problem is that uniform intensity areas like moving trucks often only give edges of movement that does not merge with each other in segmentation. Response from motion detection of humans is often short bursts when moving an arm or turning the head so as soon as it stops, there is no more response. Very short bursts like turning on a lamp or failing to estimate global motion for a frame is false detection.

One solution is that since velocity vectors are mostly perpendicular to the lines created from movement on difference images, combining multiple motion images using temporal motion blur will merge them together into larger fields so that segmentation will see a few large bodies instead of lots of independent edges. This will also cover up short pauses in human motion and hide sudden flashes that we are not interested in.

### Preferred embodiment of step 7.

Accumulate an image sum by adding the new image while subtracting the oldest image when it is removed from the history.

This is preferred because the previous of estimating error is suitable on a serial processor like a CPU or DSP. In those cases implemented on a processor with access to exact and well defined integer representations that can add and subtract without drifting.

### Alternative embodiments of step 7.

If a sum of images cannot be stored exactly without drifting from rounding errors during addition and subtraction then mix the previous result with a percentage of the new motion image.

If the motion blur is applied without exact integers then we can also apply a transform to the previous result to compensate for camera shake. It is preferred to have a high-pass filtered transform so that shake is compensated for but following a fast moving object does not blur out the target relative to the background. This is however usually not a problem since the movement image has a low enough resolution to make the shake from self-rotation insignificant in most cases.

While the invention has been described in connection with what is presently considered to be the most practical and preferred embodiments, it is to be understood that the invention is not to be limited to the disclosed embodiments, on the contrary, it is intended to cover various modifications and equivalent arrangements within scope of the appended claims.

## Claims

**1.** A method for detecting motion in a video, the method comprising the steps of:

- Estimating (1) global rotation for T[t-d..t];
- Getting (1.1) global rotation for T[t-1..t];
- Storing (1.2) old images and transforms;
- Accumulating (1.3) transforms;
- Detecting (2) motion;
- Sampling (2.1) new and old images with transform applied to the older image;
- Estimating (2.2) smoothness to discriminate noise;
- Estimating (2.3) brightness to detect moves in dark places;
- Detecting (2.4) differences to find motion;
- Estimating (2.5) movement using smoothness, brightness and difference; optionally
- Compensating (2.6) for light changes by subtracting a constant; and
- Eroding (3) the difference image.

2. The method of claim 1, further comprising performing (4) regional analysis.

3. The method of claim 1 or 2, further comprising applying (5) a radial mask.

4. The method of claim 1, 2, or 3, further comprising estimating (6) false detection, by thresholding the result with a lower threshold and adjusting time delta and erosion for the next frame.

5. The method of claim 1, 2, 3, or 4, further comprising the step of applying (7) temporal motion blur.

6. The method of any one of the claim 5, further comprising accumulating an image sum by adding the new image while subtracting the oldest image when it is removed from the history.

7. The method of claim 5, further comprising mixing the previous result with a percentage of the new motion image.

8. The method of claim 7, further comprising employing a transform which is temporally high-pass filtered to compensate for acceleration but not persistent velocity so that following a fast moving object of interest does not become a blurry line that cannot be detected.

FIG. 1

FIG. 2

FIG. 3

FIG. 4

Europäisches
Patentamt

European
Patent Office

Office européen
des brevets

# EUROPEAN SEARCH REPORT

Application Number

EP 16 17 1267

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHAOZHENG YIN AND ROBERT COLLINS ED - SINGH ET AL: "CHAPTER 12: Moving Object Localization in Thermal Imagery by Forward-Backward Motion History Images", 2009, AUGMENTED VISION PERCEPTION IN INFRARED (BOOK SERIES: ADVANCES IN PATTERN RECOGNITION), SPRINGER, PAGE(S) 271 - 291, XP009146828, ISBN: 978-1-84800-277-7 * abstract * * Sec. 12.2; sentence 5, paragraph 2 - sentence 5, paragraph 3 * * figure 12.7 * * Sec. 12.3.1; sentence 1, paragraph 1 - sentence 17 * * Sec. 12.3.2; paragraph [0001] - paragraph [0002] * | 1,5-8 | INV. G06T3/00 G06T7/20 ADD. G06T5/30 G06T7/00 |
| A | EP 0 833 503 A2 (NEXTLEVEL SYSTEMS INC [US]) 1 April 1998 (1998-04-01) * abstract * * page 5, line 12 - line 37 * * page 5, line 38 - line 45 * | 1 | |
| | ----- | | TECHNICAL FIELDS SEARCHED (IPC) |
| A | G MEDIONI: "Detection and tracking of moving objects from a moving platform", USC, 2008, page 47 pp., XP055323185, * page 2 * * page 3 * * page 10 * * page 46 * | 1-4 | G06T H04N |

-/--

The present search report has been drawn up for all claims

| Place of search | Date of completion of the search | Examiner |
|---|---|---|
| Munich | 2 December 2016 | Mohedano del Pozo, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 16 17 1267

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | & QIAN YU ET AL: "A GPU-based implementation of motion detection from a moving platform", COMPUTER VISION AND PATTERN RECOGNITION WORKSHOPS, 2008. CVPR WORKSHOPS 2008. IEEE COMPUTER SOCIETY CONFERENCE ON, IEEE, PISCATAWAY, NJ, USA, 23 June 2008 (2008-06-23), pages 1-6, XP031285652, ISBN: 978-1-4244-2339-2 * abstract * * Sec. 1; sentence 5, paragraph 3 - sentence 10, paragraph 3 * * Sec. 3; sentence 6, paragraph 1 - sentence 13, paragraph 1 * * Sec. 3; sentence 6, paragraph 2 - sentence 8, paragraph 2 * * Sec. 3; sentence 12, paragraph 2 - sentence 16, paragraph 2 * ----- | | |
| A | PROKOPOWICZ P N ET AL: "THE DYNAMIC RETINA: CONTRAST AND MOTION DETECTION FOR ACTIVE VISION", INTERNATIONAL JOURNAL OF COMPUTER VISION, KLUWER ACADEMIC PUBLISHERS, NORWELL, US, vol. 16, no. 3, November 1995 (1995-11), pages 191-204, XP000544211, ISSN: 0920-5691, DOI: 10.1007/BF01539626 * abstract * * Sec. 2.2; sentence 8, paragraph 7 - sentence 11 * * Sec. 2.2; sentence 16, paragraph 7 - sentence 21 * * Sec. 2.2; sentence 1, paragraph 8 - sentence 12 * ----- | 1 | |

TECHNICAL FIELDS
SEARCHED (IPC)

The present search report has been drawn up for all claims

| Place of search | Date of completion of the search | Examiner |
|---|---|---|
| Munich | 2 December 2016 | Mohedano del Pozo, R |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 17 1267

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2016

| Patent document cited in search report | | Publication date | Patent family member(s) | | Publication date |
|---|---|---|---|---|---|
| EP 0833503 | A2 | 01-04-1998 | CA | 2216077 A1 | 27-03-1998 |
| | | | CN | 1180276 A | 29-04-1998 |
| | | | EP | 0833503 A2 | 01-04-1998 |
| | | | HK | 1010299 A1 | 03-10-2003 |
| | | | JP | H10178613 A | 30-06-1998 |
| | | | NO | 974432 A | 30-03-1998 |
| | | | US | 5751378 A | 12-05-1998 |

EPO FORM P0459

For more details about this annex : see Official Journal of the European Patent Office, No. 12/82